# EUROPEAN PATENT APPLICATION

(11) **EP 2 455 165 A1**
(43) Date of publication of application: **23.05.2012**
(21) Application number: 11179254.5
(22) Date of filing: 30.08.2011
(51) Int. Cl.: B05C 11/04, D21G 3/00

(54) **Method for manufacturing a doctor blade laminate, and a doctor blade laminate**

(30) Priority: 18.11.2010 FI 20106216
(71) Applicant: Exel Composites OYJ, 01510 Vantaa (FI)
(72) Inventor: Miettinen, Pentti, FI-82110 Heinävaara (FI)
(74) Representative: Heinänen, Pekka Antero

(57) **Abstract**

Method for manufacturing a doctor blade laminate, in which method fibers, fiber fabrics, multiaxial fabrics, or the like, as well as a matrix medium, which are pressed in a laminating machine into a laminate, are fed into a laminating machine. The invention is implemented such that a powdered matrix, such as an epoxy, is used as a matrix medium. The invention also relates to a doctor blade laminate manufactured by means of the method.

## Description

The object of this invention is a method as defined in the preamble of claim 1 for manufacturing a doctor blade laminate, in which method fibers, fiber fabrics, multiaxial fabrics, or the like, as well as a matrix medium, which are pressed in a laminating machine into a laminate, are fed into a laminating machine.

The doctor blade is manufactured from fiber laminate, *inter alia,* in a laminating machine. In the laminating process fibers (fabrics, multiaxials, *et cetera)* are on rolls the width of the laminating machine at the start end of the machine. From the rolls they are led to a screen of the laminating machine, which screen is tightly woven cloth, sheet metal or plastic film. The fibers travel onwards on the screen, when a matrix, i.e. binder agent, is added to them. Typically resins, e.g. epoxy resin, in a fluid form are used as a matrix. The mixture of fibers and matrix is pressed after this between screens, plastic films, metal sheets or some other metallic rollers, or between a combination of these, in which case it hardens and any air leaves it. The hardened laminate moves forward at an even speed to the so-called "cooling area", after which the laminate comes out of the machine and is wound into a roll. The finished laminate can be cut into doctor blades of the desired size.

It is also possible to directly use so-called "prepregs", i.e. the fibers have already been impregnated with resin.

In this type of so-called "wet method" the pressure of the screens of the laminating machine is difficult to control, which limits the width of a laminating machine to typically between 0.5-1.5 m. In addition, rather a lot of wastage occurs from fluid matrix, because the dispensing is not very accurate.

The purpose of the invention is to achieve a method to which the aforementioned drawbacks are not attached. The method according to the invention is characterized in that a powdered matrix, such as an epoxy, is used as a matrix medium.

One preferred embodiment of the method according to the invention is characterized in that after adding the powdered matrix the mixture is transferred to a heating area, when the matrix melts and moistens the fibers.

The purpose of the invention is also to achieve a doctor blade laminate manufactured by means of the method. The doctor blade laminate according to the invention is characterized in that the matrix medium is before the laminating process a powdered matrix, such as an epoxy.

One of the advantages of the invention that can be mentioned is that significantly fewer emissions are caused by a matrix that is powdered, because the dispensing is more precise. By means of the invention the withstanding of a high temperature can be achieved. The laminating process is fast (0.2-2 m/min). As a result of the invention a wider doctor blade machine than before can be used, i.e. the width range 0.2-5 m is possible. This is because the pressure of the screens is easier to control with a matrix in powder form. All thicknesses of the doctor blade laminate are possible between 0.3-5 mm. Since the fibers are fed directly into the laminating process while they are dry, freedom is achieved for the structure of the laminate, in other words carbon fibers, glass fibers and other fibers to be used with thermoplastics become viable. Also longitudinal fibers and transverse fibers as well as fabrics, biaxials, triaxials and hybrids.

In the following, the invention will be described in more detail by the aid of a preferred embodiment.

The laminating process according to the invention proceeds such that at first fibers, fiber fabrics, multiaxials, *et cetera,* are on rolls the width of the laminating machine at the start end of the machine, from where they are led into the laminating machine Under the fibers is a so-called "screen", which can be e.g. tightly woven cloth, sheet metal or plastic film, on top of which the fibers travel into the machine. The necessary amount of powdered matrix, such as epoxy, is added to the fibers e.g. by dispensing by shaking. After this, the fibers together with the powdered matrix are driven to below the top screen, in which case they move to the so-called "heating area", where the powdered matrix melts and moistens the fibers with resin and simultaneously starts to react.

After this the mixture moves forwards between the screens and the pressure between the screens rises in the so-called "compression and hardening area", in which case air leaves the laminate.

The hardened laminate moves forward at an even speed and arrives in the so-called "cooling area", where it cools. Finally the laminate comes out of the machine and is wound into the desired roll.

It is obvious to the person skilled in the art that the invention is not limited to the embodiments presented above, but that it can be varied within the scope of the claims presented below. Instead of screens, the laminating machine can comprise rollers or drums, between which the laminate is pressed and hardened.

## Claims

1. Method for manufacturing a doctor blade laminate, in which method fibers, fiber fabrics, multiaxial fabrics, or the like, as well as a matrix medium, which are pressed in a laminating machine into a laminate, are fed into a laminating machine, **characterized in that** a powdered matrix, such as an epoxy, is used as a matrix medium.

2. Method according to claim 1, **characterized in that** after adding the powdered matrix the mixture is transferred to a heating area, in which case the powdered matrix melts and moistens the fibers.

3. Doctor blade laminate, which is manufactured in a laminating machine from fibers, fiber fabrics, multiaxial fabrics, or the like, and from a matrix medium, **characterized in that** the matrix medium is before the laminating process a powdered matrix, such as an epoxy.
